# EUROPÄISCHE PATENTSCHRIFT

(11) **EP 3 802 270 B1**
(45) Veröffentlichungstag und Bekanntmachung des Hinweises auf die Patenterteilung: **16.07.2025**
(21) Anmeldenummer: 18732260.7
(22) Anmeldetag: 01.06.2018
(51) Int. Cl.: B62B 1/12, B62B 1/14, B62B 1/26, A47B 37/04, A47B 83/04, B62B 5/06, B62B 1/00, A47B 3/08, A47B 31/00

(54) **BEFÖRDERUNGSFAHRZEUG UND BEFÖRDERUNGSVORRICHTUNG**
TRANSPORT VEHICLE AND TRANSPORT DEVICE
VÉHICULE TRANSPORT ET DISPOSITIF DE TRANSPORT

(43) Veröffentlichungstag der Anmeldung: 14.04.2021
(73) Patentinhaber: TANOS GmbH Verpacken Ordnen Präsentieren, 89257 Illertissen (DE)
(72) Erfinder: WOLLE, Lutz, 89233 Burlafingen (DE); GERBRANDA, Tjeerd Jan Pieter, 89340 Leipheim (DE); MICHELMANN, Ingo, 89091 Ulm (DE)
(74) Vertreter: Patentanwälte Magenbauer & Kollegen Partnerschaft mbB
(86) Internationale Anmeldenummer: PCT/EP2018/064483
(87) Internationale Veröffentlichungsnummer: WO 2019/228646

(56) Entgegenhaltungen:
- DE-U1- 202007 002 551
- US-A1- 2014 110 447
- US-B1- 6 386 557
- US-B1- 6 543 796
- US-B1- 7 367 571

## Beschreibung

Die Erfindung betrifft eine Beförderungsvorrichtung, umfassend ein Beförderungsfahrzeug, das umfasst:
- einen Fahrzeugkörper mit einem unteren Abschnitt und einem sich von dem unteren Abschnitt nach oben erstreckenden vertikalen Gestellabschnitt, wobei der untere Abschnitt über eine Stellfläche und eine Behälter-Befestigungsschnittstelle verfügt, mit der ein auf der Stellfläche abgestellter kastenförmige Behälter ohne Veränderung des vertikalen Gestellabschnitts an dem unteren Abschnitt befestigbar ist,
- einen am Fahrzeugkörper angeordneten Griff, mit dem das Beförderungsfahrzeug in eine Kippstellung versetzbar ist, und
- zwei am unteren Abschnitt angeordnete Räder, mit denen das Beförderungsfahrzeug in der Kippstellung gegenüber einem Boden abgestützt und relativ zum Boden bewegt werden kann.

Ein solches Beförderungsfahrzeug ist aus dem Stand der Technik bekannt. So ist als Beförderungsfahrzeug zur Beförderung von kastenförmigen Behältern beispielsweise das von der Firma TANOS GmbH erhältliche Produkt "Sys-Roll" bekannt.

Das eingangs genannte Beförderungsfahrzeug wird typischerweise dazu eingesetzt, ein oder mehrere kastenförmige Behälter zu einem Einsatzort, beispielsweise einer Baustelle, zu transportieren. In dem kastenförmigen Behälter wird in der Regel Werkzeug, beispielsweise ein Elektrowerkzeug, und/oder Werkzeugzubehör aufbewahrt. Die kastenförmigen Behälter sind insbesondere derart ausgestaltet, dass sie aufeinander gestapelt und vertikal zugfest aneinander gekoppelt werden können, um einen stabilen vertikalen, insbesondere quaderförmigen, Stapel zu bilden. Zu diesem Zweck verfügen die kastenförmigen Behälter jeweils über den gleichen horizontalen Grundriss sowie über Kopplungsmittel, mit denen sie aneinander gekoppelt werden können. Der Stapel kann mit dem untersten kastenförmigen Behälter auf der Stellfläche des Beförderungsfahrzeugs platziert und mittels der Behälter-Befestigungsschnittstelle befestigt werden. Zweckmäßigerweise wird der Stapel nur mit dem untersten kastenförmigen Behälter am Beförderungsfahrzeug befestigt. Der Fahrzeugkörper, insbesondere der vertikale Gestellabschnitt, stellt eine dauerhaft integre Struktur dar; d.h. der Fahrzeugkörper, insbesondere der vertikale Gestellabschnitt, bleibt in seinem Aufbau bei der Anbringung und Abnahme eines kastenförmigen Behälters unverändert. Der kastenförmige Behälter ist zweckmäßigerweise werkzeuglos von dem Beförderungsfahrzeug abnehmbar und/oder an diesem anbringbar.

Das Beförderungsfahrzeug kann manuell in eine Kippstellung versetzt werden, bei der das Beförderungsfahrzeug um eine durch die Räder definierte Kippachse gegenüber dem Boden verkippt ist. In diesem Zustand kann das Beförderungsfahrzeug in der Art einer Sackkarre bewegt, insbesondere geschoben oder gezogen werden. Das Beförderungsfahrzeug kann auch als "sacckarrenartig" bzw. als Sackkarre bezeichnet werden.

Eine Kombination aus dem Beförderungsfahrzeug und dem damit zu befördernden Beförderungsgut, beispielsweise dem genannten kastenförmigen Behälter, soll als die Beförderungsvorrichtung bezeichnet werden.

Die US 6,386,557 B1 beschreibt ein Kühler-Fahrzeug mit einem Becherhalterpanel.

Die US 6,543,796 B1 beschreibt einen kombinierten Tisch- und Gepäck-Träger zum Transportieren von Gepäck und zum Dienen als Arbeitstisch.

Die US 7,367,571 B1 beschreibt einen Werkzeugmachinenstand und/oder Arbeitsbank, Steckdosenpanel, Lichtversorgung und modulares Taskboxsystem, kombiniert in einem integrierten System.

Die US 2014/0110447 A1 beschreibt eine zusammenklappbare, abnehmbare Ablage für zweirädrige Handwagen.

Die DE 20 2007 002 551 U1 beschreibt einen Wäschewagen, der im Wesentlichen von einem Wagen gebildet wird.

Eine Aufgabe der Erfindung besteht darin, das Beförderungsfahrzeug unter Beibehaltung seines kompakten und einfachen Aufbaus mit einer weiteren Funktion auszustatten.

Die Aufgabe wird gelöst durch eine Beförderungsvorrichtung gemäß Anspruch 1. Das Beförderungsfahrzeug umfasst einen horizontal ausgerichteten, integrierten Tisch, der am oberen Ende des vertikalen Gestellabschnitts angeordnet ist und den oberen Abschluss des Fahrzeugkörpers bildet.

Somit kann das Beförderungsfahrzeug nicht nur zum Transport von kastenförmigen Behälter sondern zusätzlich auch noch als Arbeitstisch verwendet werden. Der integrierte Tisch bildet den oberen Abschluss des Fahrzeugkörpers, so dass der kompakte und einfache Aufbau des Beförderungsfahrzeugs beibehalten werden kann.

Die Beförderungsvorrichtung umfasst ferner einen länglichen Arbeitstisch sowie eine am Beförderungsfahrzeug vorhandene Arbeitstisch-Befestigungsschnittstelle, mit der der längliche Arbeitstisch in einer vertikalen Ausrichtung in einem rückwärtigen Bereich an dem Beförderungsfahrzeug werkzeuglos befestigbar ist, um eine Transportstellung einzunehmen, in der der längliche Arbeitstisch durch das Beförderungsfahrzeug beförderbar ist, wobei der integrierte Tisch über einen Abstützabschnitt verfügt, an dem der Arbeitstisch in einer horizontalen Ausrichtung mit einem am Arbeitstisch stirnseitig angebrachten Befestigungselement abgestützt werden kann, um eine stabile Arbeitsstellung einzunehmen.

Vorteilhafte Weiterbildungen sind Gegenstand der Unteransprüche.

Exemplarische Details und Ausführungsformen werden nachstehend unter Bezugnahme auf die Figuren erläutert. Dabei zeigt:
- Figur 1: eine perspektivische Ansicht eines Beförderungsfahrzeugs,
- Figur 2: eine weitere perspektivische Ansicht des Beförderungsfahrzeugs,
- Figur 3: eine perspektivische Ansicht einer Beförderungsvorrichtung in einer Transportkonfiguration,
- Figur 4: eine Rückansicht des Beförderungsfahrzeugs,
- Figur 5: eine perspektivische Rückansicht der Beförderungsvorrichtung,
- Figur 6: eine Detailansicht einer ersten Befestigungseinrichtung des Beförderungsfahrzeugs,
- Figur 7: eine perspektivische Ansicht der Beförderungsvorrichtung in einer Arbeitskonfiguration,
- Figur 8: eine weitere perspektivische Ansicht der Beförderungsvorrichtung in der Arbeitskonfiguration,
- Figur 9: eine perspektivische Ansicht eines kastenförmigen Behälters,
- Figur 10: ein vertikaler Schnitt durch einen an einer Behälter-Befestigungsschnittstelle angebrachten Behälter und
- Figur 11: einen auf einer Stellfläche des Beförderungsfahrzeugs abgestellten Behälter.

Bei den nachfolgenden Erläuterungen wird auf die in den Figuren eingezeichnete x-Richtung, y-Richtung und z-Richtung Bezug genommen. Die x-Richtung, y-Richtung und z-Richtung sind orthogonal zueinander ausgerichtet. Die x-Richtung kann auch als Querrichtung, die y-Richtung auch als Längsrichtung und die z-Richtung auch als Vertikalrichtung bezeichnet werden. Ferner können die x-Richtung und die y-Richtung auch als horizontale Richtungen bezeichnet werden. Das Bezugssystem für die Richtungen ist das Beförderungsfahrzeug 2 bzw. die Beförderungsvorrichtung 1 in einer aufrechten Stellung.

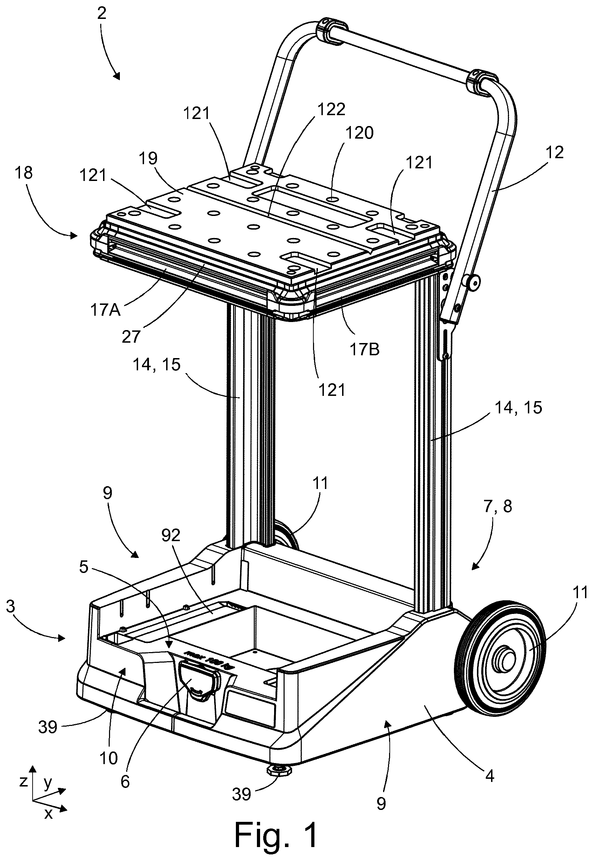

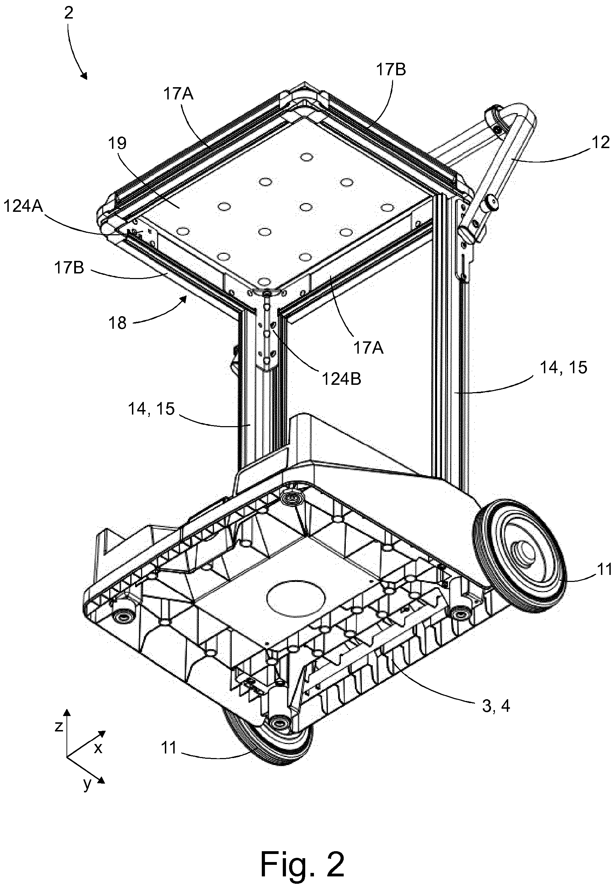

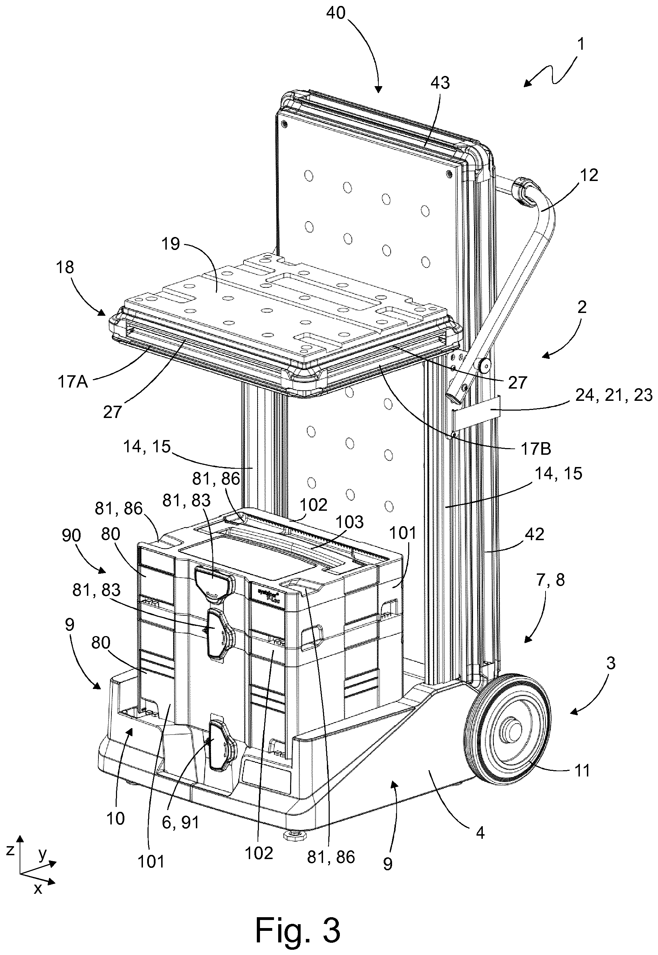

Die Figuren 1 und 2 zeigen ein Beförderungsfahrzeug 2. Das Beförderungsfahrzeug 2 umfasst einen Fahrzeugkörper mit einem unteren Abschnitt 3 und einem sich von dem unteren Abschnitt 3 nach oben erstreckenden vertikalen Gestellabschnitt 14. Der untere Abschnitt 3 verfügt über eine Stellfläche 5 und eine Behälter-Befestigungsschnittstelle 6. Mit der Behälter-Befestigungsschnittstelle kann ein auf der Stellfläche 5 abgestellter kastenförmige Behälter 80 an dem unteren Abschnitt 3 befestigt werden. Ein solcher Behälter 80 ist exemplarisch in der Figur 3 gezeigt. Zur Anbringung oder Abnahme des kastenförmigen Behälters 80 ist keine Veränderung, insbesondere kein Umbau, des vertikalen Gestellabschnitts 14 erforderlich.

Das Beförderungsfahrzeug 2 umfasst ferner einen am Fahrzeugkörper, insbesondere am vertikalen Gestellabschnitt 14 angeordneten Griff 12, mit dem das Beförderungsfahrzeug 2 in eine Kippstellung versetzbar ist. Ferner umfasst das Beförderungsfahrzeug 2 zwei am unteren Abschnitt 3 angeordnete Räder 11, mit denen das Beförderungsfahrzeug 2 in der Kippstellung gegenüber einem Boden abgestützt und relativ zum Boden bewegt werden kann.

Das Beförderungsfahrzeug umfasst ferner einen horizontal ausgerichteten, integrierten Tisch 18, der am oberen Ende des vertikalen Gestellabschnitts 14 angeordnet ist und den oberen Abschluss des Fahrzeugkörpers bildet.

Nachstehend werden weitere exemplarische Details erläutert.

Zunächst zum Grundaufbau des Beförderungsfahrzeugs 2:
Das Beförderungsfahrzeug 2 weist eine querseitige Vorderseite 10, zwei Längsseiten 9 und eine querseitige Rückseite 8 auf. Der untere Abschnitt 3 wird exemplarisch von einem Unterteil 4 gebildet, das eine im Wesentlichen quaderförmige, insbesondere flache Grundgestalt aufweist. Die y-Erstreckung und die x-Erstreckung des Unterteils 4 sind jeweils wenigstens doppelt so groß wie die z-Erstreckung des Unterteils 4. Das Unterteil 4 verfügt an seiner Unterseite über einen, zwei oder mehr Standfüße 39, mit denen das Beförderungsfahrzeug 2 in Standstellung stabil auf einem ebenen Boden steht. An den Längsseiten 9 des Unterteils 4 ist jeweils ein Rad 11 angeordnet, und zwar im rückwärtigen Bereich 7 des Beförderungsfahrzeugs 2, also in der Nähe der Rückseite 8. Die beiden Räder 11 verfügen über koaxial angeordnete, in x-Richtung ausgerichtete Drehachsen.

Das Beförderungsfahrzeug 2 kann eine Standstellung einnehmen, in der es stabil auf dem Boden steht. In der Standstellung ist der untere Abschnitt 3 parallel zum Boden 30 ausgerichtet und der vertikale Gestellabschnitt 14 ist senkrecht zum Boden 30 ausgerichtet. Zweckmäßigerweise steht das Beförderungsfahrzeug 2 in der Standstellung nur auf den Standfüßen 39 und insbesondere nicht auf den Rädern 11. Das Beförderungsfahrzeug 2 kann ferner eine Fahrstellung einnehmen, in der es relativ zum Boden verkippt ist, beispielsweise um ca. 45 Grad. In der Fahrstellung lässt sich das Beförderungsfahrzeug 2 durch manuelles Schieben oder Ziehen in Bewegung versetzen. Das Beförderungsfahrzeug 2 lässt sich folglich wie eine Sacckarre handhaben und kann auch als sackkarrenartig bezeichnet werden.

Der exemplarisch aus dem untere Abschnitt 3, dem vertikalen Gestellabschnitt 14 und dem integrierten Tisch 18 bestehende Fahrzeugkörper hat in einer y-z-Seitenansicht im Wesentlichen die Form eines um 90 Grad gedrehten U bzw. die Form eines C. Der untere Abschnitt 3 und der integrierte Tisch 18 stellen in einer y-z-Seitenansicht jeweils horizontale Schenkel dar, die durch den vertikalen Gestellabschnitt 14, zweckmäßigerweise nur durch den vertikalen Gestellabschnitt 14, verbunden sind.

Der untere Abschnitt 3 und der vertikale Gestellabschnitt 14 bilden zusammen (ohne den Griff 12) in einer y-z-Seitenansicht eine im Wesentlichen L-förmige Struktur.

Die Erstreckung des vertikalen Gestellabschnitts 14 in z-Richtung ist größer als die Erstreckung des unteren Abschnitts 3 in y-Richtung und größer als die Erstreckung des integrierten Tischs 18 in y-Richtung. Die y-Erstreckung des unteren Abschnitts 3 entspricht der y-Erstreckung des integrierten Tischs 18. Der vertikale Gestellabschnitt 14 nimmt vorzugsweise wenigstens 60%, insbesondere wenigstens 70% der z-Erstreckung des Fahrzeugkörpers oder des Beförderungsfahrzeugs 2 ohne den Griff 12 ein.

Der vertikale Gestellabschnitt 14 ist in dem rückwärtigen Bereich 7 des Beförderungsfahrzeugs 2 angeordnet. Zweckmäßigerweise ist der integrierte Tisch 18 gegenüber dem untere Abschnitt 3 nur durch den im rückwärtigen Bereich 7 angeordneten vertikalen Gestellabschnitt 14 abgestützt. Zwischen dem integrierten Tisch 18 und dem unteren Abschnitt 3 befindet sich somit in y-Richtung vor dem vertikalen Gestellabschnitt 14 ein vollständig freies Volumen zur Aufnahme eines oder mehrerer kastenförmiger Behälter 80. Bis auf den im rückwärtigen Bereich 7 angeordneten Gestellabschnitt 14 ist das zwischen dem integrierten Tisch 18 und dem Unterteil 4 vorhandene Volumen vorzugsweise vollständig frei.

Der den unteren Abschnitt 3, den vertikalen Gestellabschnitt 14 und den integrierten Tisch 18 umfassende Fahrzeugkörper stellt vorzugsweise eine dauerhaft integere Struktur dar, die bei der Abnahme und/oder Anbringung eines kastenförmigen Behälters 80 an der Behälter-Befestigungsschnittstelle 6 unverändert bleibt. Ein Umbau des Fahrzeugkörpers, insbesondere des vertikalen Gestellabschnitts 14 und/oder des integrierten Tischs 18 ist zur Abnahme und/oder Anbringung des kastenförmigen Behälters 80 an der Behälter-Befestigungsschnittstelle 6 nicht erforderlich. Zweckmäßigerweise können der integrierte Tisch 18 und/oder der vertikale Gestellabschnitt 14 nicht werkzeuglos vom Fahrzeugkörper abgenommen werden.

Der vertikale Gestellabschnitt 14 spannt eine x-z-Ebene auf. Exemplarisch umfasst der vertikale Gestellabschnitt 14 zwei längliche, sich von dem unteren Abschnitt 3 vertikal nach oben erstreckende, parallel zueinander verlaufende vertikale Gestellelemente 15. Vorzugsweise besteht der vertikale Gestellabschnitt 14 aus den beiden Gestellelementen 15.

Die beiden vertikalen Gestellelemente 15 nehmen jeweils denselben y- und z-Bereich ein und sind in x-Richtung zueinander versetzt. Die vertikalen Gestellelemente 15 sind in y-Richtung jeweils in der Nähe der Rückseite 8, also im rückwärtigen Bereich 7, angeordnet und befinden sich in x-Richtung im Bereich der Längsseiten 9. Die beiden vertikalen Gestellelemente 15 sind an der Oberseite des Unterteils 4 befestigt und erstrecken sich vertikal nach oben.

Die vertikalen Gestellelemente 15 sind exemplarisch als Profile, insbesondere als Metallprofile, ausgebildet.

An den vertikalen Gestellabschnitt 14 schließt sich in z-Richtung der in den Fahrzeugkörper integrierte Tisch 18 an. Der integrierte Tisch 18 stellt den vertikal oberen Abschluss des Fahrzeugköpers - also insbesondere des Beförderungsfahrzeugs 2 ohne den Griff 12 - dar. Zweckmäßigerweise stellt der integrierte Tisch 18 den vertikal höchsten Punkt des Beförderungsfahrzeugs 2 ohne den Griff 12 dar.

Der integrierte Tisch 18 umfasst einen horizontalen Gestellabschnitt mit wenigstens einem horizontalen Gestellelement 17A. Das horizontale Gestellelement 17A ist am oberen Ende des vertikalen Gestellabschnitts 14 angeordnet. Der integrierte Tisch 18 umfasst ferner eine auf dem horizontalen Gestellelement 17A angeordnete, insbesondere aufgesetzte, Tischplatte 19.

Die Tischplatte 19 ist exemplarisch rechteckig ausgeführt. An ihrer Oberseite verfügt die Tischplatte 19 exemplarisch über ein Lochraster 120 mit regelmäßig beabstandeten Löchern. Die Löcher dienen z.B. zur Anbringung (in den Figuren nicht gezeigter) Spannelemente, mit denen z.B. ein Werkstück auf dem integrierten Tisch fixiert werden kann. Exemplarisch verfügt die Tischplatte 19 an ihrer Oberseite ferner über Vertiefungen 121 zur Aufnahme von Standfüssen eines (in den Figuren nicht gezeigten) Behälters. Die Vertiefungen sind exemplarisch rechteckig und in den Eckbereichen der Tischplatte 19 angeordnet. Ferner weist die Tischplatte 19 exemplarisch eine über die Oberseite der Tischplatte 19 verlaufende Nut 122 auf. Die Nut ist vorzugsweise als V-Nut ausgeführt und dient insbesondere zur Fixierung von Werkstücken. Zweckmäßigerweise erstreckt sich die V-Nut über die gesamte x-Erstreckung der Tischplatte 19.

Wie vorstehend bereits erwähnt, umfasst der integrierte Tisch 18 einen horizontalen Gestellabschnitt mit wenigstens einem länglichen, horizontalen Gestellelement 17A, auf dem die Tischplatte 19 angeordnet ist. Das horizontale Gestellelement 17A erstreckt sich vom oberen Ende des einen vertikalen Gestellelements 15 zum oberen Ende des anderen vertikalen Gestellelements 15.

Der integrierte Tisch 18, insbesondere der horizontale Gestellabschnitt, exemplarisch das horizontale Gestellelement 17A, dient somit als Versteifungselement für den vertikalen Gestellabschnitt 17A. Zweckmäßigerweise sind zwischen dem integrierten Tisch 18 und dem Unterteil 4 keine weiteren Versteifungselemente zwischen den beiden vertikalen Gestellelementen 15 vorhanden.

Exemplarisch umfasst der horizontale Gestellabschnitt zusätzlich zu dem vorgenannten horizontalen Gestellelement 17A über drei weitere längliche, horizontale Gestellelemente 17A, 17B.

Der integrierte Tisch 18 verfügt somit über vier längliche, horizontale Gestellelemente 17A, 17B. Die horizontalen Gestellelemente 17A, 17B sind exemplarisch als Profile, insbesondere als Metallprofile, ausgebildet. Die Gestellelemente 17 bilden zusammen den horizontalen Gestellabschnitt in der Form eines rechteckigen Rahmens, auf dem die Tischplatte 19 des integrierten Tischs 18 angeordnet, insbesondere aufgesetzt, ist. Der integrierte Tisch 18 nimmt im Wesentlichen denselben x-y-Bereich wie der untere Abschnitt 3 ein. Der integrierte Tisch 18 hat zweckmäßigerweise eine quaderförmige, insbesondere flache Grundgestalt.

Wie in der Figur 2 zu sehen, sind die beiden horizontalen Gestellelemente 17A parallel zur x-Richtung und die beiden horizontalen Gestellelemente 17B parallel zur y-Richtung ausgerichtet. Das parallel zur x-Richtung ausgerichtetes Gestellelement 17A verbindet die beiden vertikalen Gestellelemente 15 an ihrem oberen Ende und bildet zusammen mit den beiden Gestellelementen 15 in x-z-Seitenansicht ein umgedrehtes U. Die beiden parallel zur y-Richtung ausgerichteten Gestellelemente 17B erstrecken sich von den oberen Enden der vertikalen Gestellelemente 15 in y-Richtung nach vorne.

Der horizontale Gestellabschnitt spannt eine x-y-Ebene auf, die orthogonal zu der von dem vertikalen Gestellabschnitt 14 aufgespannten x-z-Ebene ausgerichtet ist. Der horizontale Gestellabschnitt ist am oberen Ende des vertikalen Gestellabschnitts 14, exemplarisch an den beiden vertikalen Gestellelementen 15, befestigt. Der integrierte Tisch 18 ist insbesondere mit seinen beiden rückwärtigen Eckbereichen an den vertikalen Gestellelementen 15 befestigt.

Der horizontale Gestellabschnitt verfügt exemplarisch über vier Eckelemente, die an den Ecken des horizontalen Gestellabschnitts angeordnet sind und jeweils ein horizontales Gestellelement 17A mit einem horizontalen Gestellelement 17B verbinden. Exemplarisch verfügt jedes Eckelement über zwei um 90 Grad zueinander ausgerichtete Öffnungen. In eine der Öffnungen ist ein Ende eines horizontalen Gestellelements 17A eingesetzt und die andere Öffnung ist ein Ende eines horizontalen Gestellelements 17B eingesetzt. Die Eckelemente sind vorzugsweise aus Kunststoff gefertigt.

Wie in der Figur 2 zu sehen, sind die horizontalen Gestellelemente 17A, 17B ferner über Winkelverbinder 124A, 124B aneinander befestigt. Die Winkelverbinder 124A, 124B sind an den nach Innen gerichteten Seiten der horizontalen Gestellelemente 17A, 17B angeordnet. Die Winkelverbinder 124A und 124B verbinden jeweils ein horizontales Gestellelement 17A mit einem horizontalen Gestellelement 17B. Die Winkelverbinder 124B dienen zweckmäßigerweise ferner dazu, den horizontalen Gestellabschnitt an dem vertikalen Gestellabschnitt 14 zu befestigen. Zweckmäßigerweise sind die Winkelverbinder 124A als zweischenklige, L-förmige Winkelverbinder ausgebildet und verbinden vorzugsweise jeweils ausschließlich ein horizontales Gestellelement 17A mit einem horizontalen Gestellelement 17B. Die Winkelverbinder 124B sind vorzugsweise als dreischenklige Winkelverbinder ausgebildet und verbinden jeweils ein horizontales Gestellelement 17A und ein horizontalen Gestellelement 17B mit einem vertikalen Gestellelement 15.

Vorzugsweise verfügt der integrierte Tisch 18 über einen Abstützabschnitt 27, an dem ein nachstehend noch erläuterter Arbeitstisch 40 in einer horizontalen Ausrichtung mit einem am Arbeitstisch 40 stirnseitig angebrachten Befestigungselement 41 abgestützt werden kann, um eine stabile Arbeitsstellung einzunehmen.

Der Abstützabschnitt 27 ist beispielsweise in der Figur 1 zu sehen und exemplarisch an einer, mehreren oder sämtlichen horizontalen Gestellelementen 17A, 17B vorhanden. Zweckmäßigerweise umfasst der Abstützabschnitt 27 eine Nut, insbesondere eine V-Nut, in die das Befestigungselement 41 eingreifen kann. Die Nut ist vorzugsweise nach oben hin geöffnet, so dass das Befestigungselement 41 von oben in die Nut eingreifen kann. Zweckmäßigerweise erstreckt sich die Nut über die gesamte Länge des horizontalen Gestellelements 17A, 17B.

Nachstehend sollen die Behälter-Befestigungsschnittstelle 6 und der kastenförmige Behälter 80 näher erläutert werden, insbesondere unter Bezugnahme auf die Figur 3. In der Figur 3 ist das Beförderungsfahrzeug 2 mit wenigstens einem angebrachten kastenförmigen Behälter 80 sowie einem angebrachten Arbeitstisch 40 gezeigt. Diese Anordnung aus Beförderungsfahrzeug 2, Behälter 80 und Arbeitstisch 40 soll auch als Beförderungsvorrichtung 1 bezeichnet werden.

Die Behälter-Befestigungsschnittstelle 6 dient dazu, den kastenförmigen Behälter 80 an dem unteren Abschnitt 3, insbesondere dem Unterteil 4, des Beförderungsfahrzeugs 2 zu befestigen, vorzugsweise derart, dass der kastenförmige Behälter 80 in sämtliche Raumrichtungen fixiert ist. Zweckmäßigerweise ist die Behälter-Befestigungsschnittstelle 6 derart ausgebildet, dass sich der Behälter 80 werkzeuglos an der Behälter-Befestigungsschnittstelle 6 befestigen und/oder von dieser lösen lässt.

Exemplarisch ist in der Figur 3 ein vertikaler Stapel 90, der zwei aufeinander gestapelte und aneinander gekoppelte kastenförmige Behälter 80 umfasst, auf der Stellfläche 5 abgestellt und durch die Behälter-Befestigungsschnittstelle 6 an dem unteren Abschnitt 3 befestigt.

Exemplarisch verfügt die Behälter-Befestigungsschnittstelle 6 über ein bewegliches Kopplungselement 91, das exemplarisch als Drehriegel, insbesondere als T-förmiger Drehriegel, ausgebildet ist. Das bewegliche Kopplungselement 91 lässt sich manuell in verschiedene Drehstellungen versetzen, um die Befestigung des Behälters 80 an dem Beförderungsfahrzeug 2 wahlweise herzustellen oder zu lösen.

Das bewegliche Kopplungselement 91 ist exemplarisch an der Vorderseite 10 des unteren Abschnitts 3 angebracht und vorzugsweise drehbar gelagert, insbesondere um eine y-Drehachse.

Die Behälter-Befestigungsschnittstelle 6 umfasst vorzugsweise ferner eine nicht-bewegliche Kopplungsstruktur 92, die exemplarisch zwei in der Stellfläche 5 angeordnete Vertiefungen umfasst. Die nicht-bewegliche Kopplungsstruktur 92 lässt sich in Eingriff mit nachstehend noch erläuterten unteren Behälter-Kopplungsmitteln bringen.

Vorzugsweise ist die Behälter-Befestigungsschnittstelle 6 und/oder der Behälter 80 derart ausgebildet, dass der Behälter 80 in einem an dem Beförderungsfahrzeug 2 fixierten Zustand mit seiner Unterseite und Vorderseite, insbesondere nur mit seiner Unterseite und Vorderseite, an dem Beförderungsfahrzeug 2 befestigt ist.

### Nun zu dem Behälter 80:

Der Behälter 80 verfügt über eine quaderförmige Grundgestalt. Exemplarisch verfügt der Behälter 80 über ein Unterteil 101 und einen auf das Unterteil 101 aufgesetzten Deckel 102. Der Deckel 102 ist zweckmäßigerweise an dem Unterteil 101 angelenkt. Vorzugsweise weisen das Unterteil 101 und der Deckel 102 die gleiche horizontale Außenkontur auf. An der Oberseite des Behälters 80 ist exemplarisch ein ausklappbarer Tragegriff 103 vorgesehen.

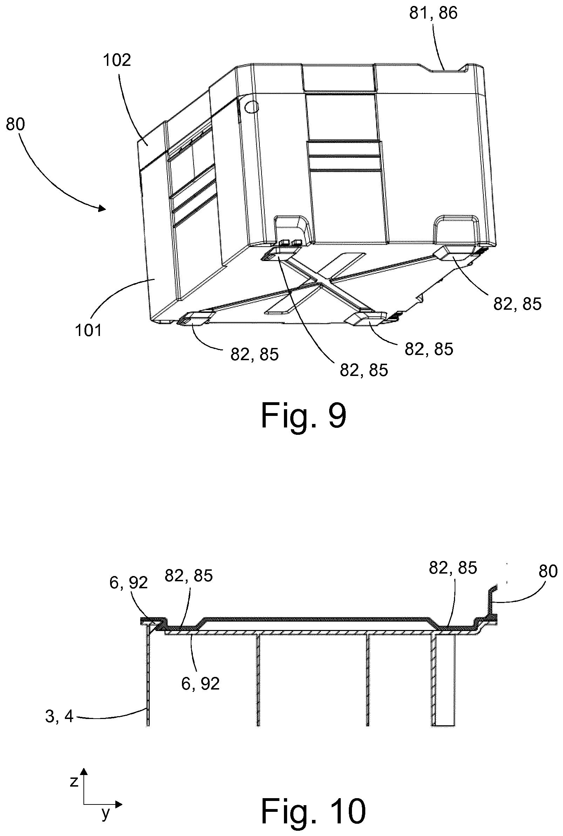

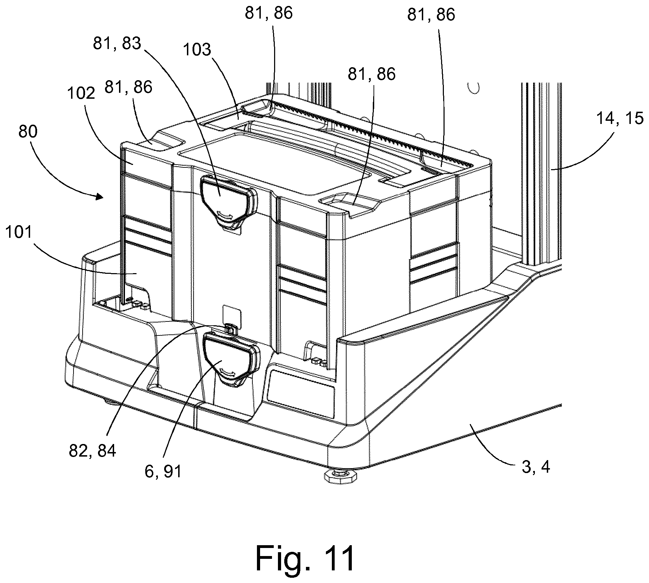

Der Behälter 80 verfügt über obere Behälter-Kopplungsmittel 81 und untere Behälter-Kopplungsmittel 82, die insbesondere in den Figuren 9 bis 11 gezeigt sind. Exemplarisch sind die oberen Behälter-Kopplungsmittel 81 in Entsprechung zu den unteren Behälter-Kopplungsmitteln 82 ausgebildet, so dass sich ein weiterer, mit identischen Behälter-Kopplungsmitteln ausgestatteter Behälter 80 auf den vorliegenden Behälter 80 aufsetzen lässt und mit den unteren Behälter-Kopplungsmitteln 82 des weiteren Behälters 80 an den oberen Behälter-Kopplungsmitteln 81 des vorliegenden Behälters 80 befestigen lässt, insbesondere derart, dass die beiden Behälter 80 in sämtliche Raumrichtungen zueinander fixiert sind und einen stabilen vertikalen Stapel 90 bilden.

Die unteren Behälter-Kopplungsmittel 82 umfassen insbesondere eine erste nicht-bewegliche Kopplungsstruktur 84, beispielsweise einen Kopplungsvorsprung, der mit dem beweglichen Kopplungselement 91 in Eingriff gebracht werden kann. Die nicht-bewegliche Kopplungsstruktur ist insbesondere an der Vorderseite des Behälters 80 angeordnet.

Die unteren Behälter-Kopplungsmittel 82 umfassen ferner eine zweite nicht-bewegliche Kopplungsstruktur 85, beispielsweise Standfüße, die mit der nicht-beweglichen Kopplungsstruktur 92 in Eingriff gebracht werden können und an der Unterseite des Behälters 80 angeordnet sind.

Die Figur 10 zeigt einen vertikalen Schnitt durch den kastenförmigen Behälter 80 in einem Zustand, in dem dessen als Standfüße ausgebildete zweite nicht-bewegliche Kopplungsstruktur 85 mit der nicht-beweglichen Kopplungsstruktur 92 der Behälter-Schnittstelle 6 in Eingriff steht. Exemplarisch verfügt die nicht-bewegliche Kopplungsstruktur 92 einen Vorsprung, der von den Standfüßen, insbesondere den hinteren Standfüßen, zweckmäßigerweise nur den hinteren Standfüßen, hintergriffen wird.

Die oberen Behälter-Kopplungsmittel 81 umfassen zweckmäßigerweise ein bewegliches Kopplungselement 83, exemplarisch einen Drehriegel, insbesondere einen T-förmigen Drehriegel, der zweckmäßigerweise in Entsprechung zu dem beweglichen Kopplungselement 91 ausgebildet ist. Das bewegliche Kopplungselement 83 kann insbesondere mit der ersten nicht-beweglichen Kopplungsstruktur 84 eines weiteren Behälters 80 in Eingriff gebracht werden. Ferner kann das bewegliche Kopplungselement 83 dazu dienen, den Deckel 102 zu verriegeln.

Die oberen Behälter-Kopplungsmittel 81 umfassen ferner vorzugsweise eine dritte nicht-bewegliche Kopplungsstruktur 86. Die dritte nicht-bewegliche Kopplungsstruktur 86 kann zweckmäßigerweise mit der zweiten nicht-beweglichen Kopplungsstruktur 85 eines weiteren Behälters 80 in Eingriff gebracht werden. Die dritte nicht-bewegliche Kopplungsstruktur 86 umfasst vorzugsweise eine oder mehrere Vertiefungen und ist an der Oberseite des Behälters 80 angeordnet.

Der Behälter 80 ist insbesondere derart ausgebildet, dass der Behälter 80 in einem an einem weiteren Behälter 80 fixierten Zustand mit seiner Unterseite und Vorderseite, insbesondere nur mit seiner Unterseite und Vorderseite, an dem weiteren Behälter 80 befestigt ist.

Die vorstehend beschriebenen Behälter 80 können beispielsweise in Entsprechung zu den in der EP2315701B1 beschriebenen Behältern ausgebildet sein.

Im Folgenden soll auf die möglichen Konfigurationen der Beförderungsvorrichtung 1 eingegangen werden.

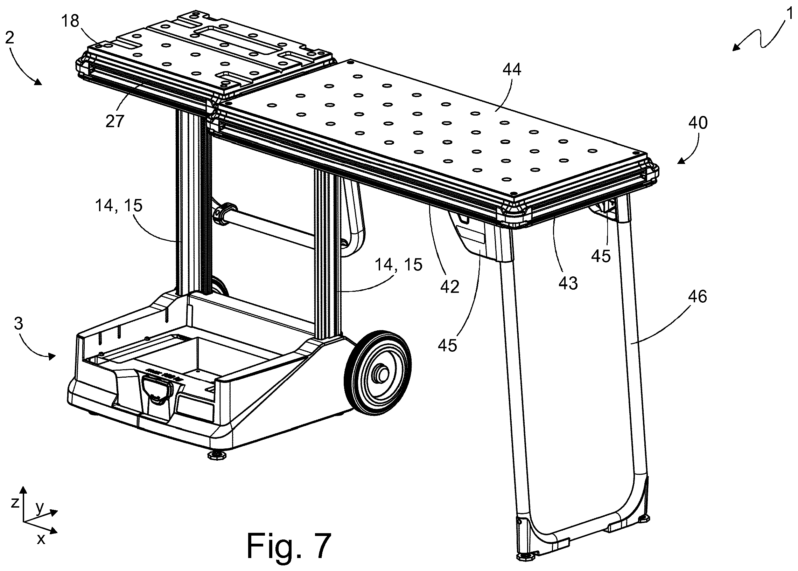

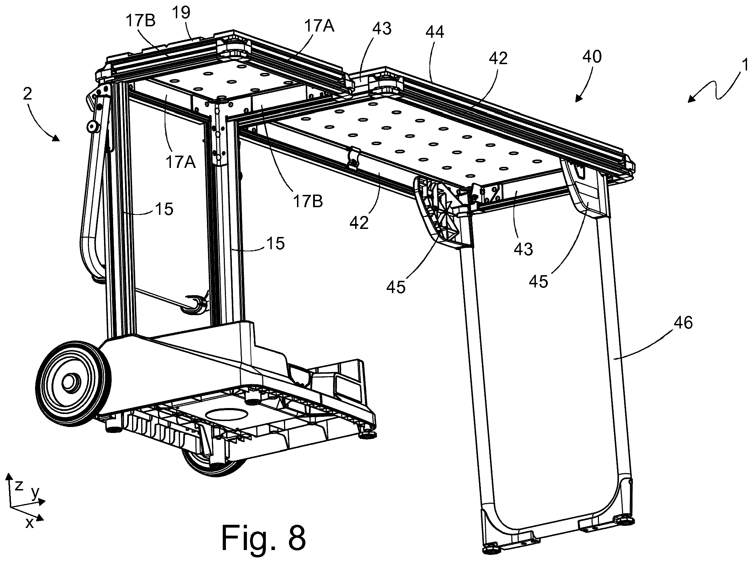

Die mit dem länglichen Arbeitstisch 40 ausgestatte Beförderungsvorrichtung 1 kann zweckmäßigerweise wenigstens zwei verschiedene Konfigurationen einnehmen: eine Transportkonfiguration, bei der der Arbeitstisch 40 wie in der Figur 3 gezeigt in vertikaler Ausrichtung an dem Beförderungsfahrzeug 2 befestigt ist und eine Arbeitskonfiguration, bei der der Arbeitstisch wie in den Figuren 7 und 8 gezeigt in horizontaler Ausrichtung an dem integrierten Tisch 18 angebracht ist.

In der Transportkonfiguration, ist der Arbeitstisch 40 (und insbesondere auch der kastenförmige Behälter 80) fest an dem Beförderungsfahrzeug 2 angebracht, so dass der Arbeitstisch 40 (und der kastenförmige Behälter 80) auch in einer Fahrstellung, in der die Beförderungsvorrichtung 1 gegenüber dem Boden 30 verkippt ist, stabil am Beförderungsfahrzeug 2 befestigt sind und sich durch das Beförderungsfahrzeug 2 befördern lassen.

Der längliche Arbeitstisch 40 kann zweckmäßigerweise vollständig von dem Beförderungsfahrzeug abgenommen werden, insbesondere werkzeuglos.

Zur Anbringung des Arbeitstischs 40 an dem Beförderungsfahrzeug 2 verfügt das Beförderungsfahrzeug 2 über eine Arbeitstisch-Befestigungsschnittstelle 24, mit der der längliche Arbeitstisch 40 in einer vertikalen Ausrichtung in dem rückwärtigen Bereich 7 an dem Beförderungsfahrzeug 2 werkzeuglos befestigbar ist, um eine Transportstellung einzunehmen, in der der längliche Arbeitstisch 40 durch das Beförderungsfahrzeug 2 beförderbar ist.

Wie in der Figur 3 zu sehen, ist der Arbeitstisch in der Transportstellung mit seiner Längsachse vertikal - also in z-Richtung - ausgerichtet. Die Tischebene des Arbeitstischs 40 ist in der Transportstellung parallel zu einer x-z-Ebene ausgerichtet. Die x-Erstreckung des Arbeitstischs 40 entspricht der x-Erstreckung des vertikalen Gestellabschnitts 14. In der Transportstellung liegt der Arbeitstisch 40 an dem vertikalen Gestellabschnitt 40 an und nimmt zweckmäßigerweise denselben x-Bereich wie der vertikale Gestellabschnitt 40 ein. In z-Richtung erstreckt sich der Arbeitstisch 40 in der Transportstellung von dem unteren Abschnitt 3 nach oben und überragt vorzugsweise das Beförderungsfahrzeug 2, insbesondere den integrierten Tisch 18 und/oder den Griff 12.

Der Arbeitstisch 40 ist in der Transportstellung in rückwärtiger Richtung - also in y-Richtung hin zu der Rückseite 8 - hinter dem vertikalen Gestellabschnitt 14 angeordnet. In y-Richtung befindet sich der Arbeitstisch 40 in der Transportstellung auf der der Rückseite 8 zugewandten Seite des vertikalen Gestellabschnitts 14. Die Stellfläche 5 befindet sich exemplarisch auf der anderen Seite - also auf der der Vorderseite 10 zugewandten Seite des vertikalen Gestellabschnitts 14.

Die Figuren 7 und 8 zeigen die Beförderungsvorrichtung 1 in einer Arbeitskonfiguration. In der Arbeitskonfiguration ist der Arbeitstisch 40 von der Arbeitstisch-Befestigungsschnittstelle 24 abgenommen. Ferner befindet sich der Arbeitstisch 40 in einer horizontalen Ausrichtung; d.h. seine Tischebene ist parallel zu einer x-y-Ebene ausgerichtet. Die in den Figuren 7 und 8 gezeigte Stellung des Arbeitstischs 40 kann auch als stationäre Arbeitsstellung bezeichnet werden. In der Arbeitsstellung wird der Arbeitstisch 40 an einer seiner Stirnseiten von dem Beförderungsfahrzeug 2 abgestützt, insbesondere von dem integrierten Tisch 18.

In den Figuren 7 und 8 ist der Arbeitstisch 40 an einer Längsseite 9 des Beförderungsfahrzeugs 2 angebracht. Der Arbeitstisch 40 ist mit seiner Längsachse parallel zur y-Richtung ausgerichtet. Exemplarisch ist der Arbeitstisch 40 an den integrierten Tisch 18 angesetzt und verlängert diesen in y-Richtung. Der Arbeitstisch 40 und der integrierte Tisch 18 bilden in einer x-y-Ansicht im Wesentlichen eine längliche, rechteckige Form, deren x-Erstreckung ein Vielfaches, insbesondere wenigstens das zweifache oder dreifache, der y-Erstreckung beträgt. Die Höhe des Arbeitstischs ist vorzugsweise gleich der Höhe des integrierten Tischs 18. Auf der dem Beförderungsfahrzeug 2 abgewandten Stirnseite ist der Arbeitstisch 40 durch eine nachstehend noch näher erläuterte Tischbeinanordnung 46 abgestützt.

Zweckmäßigerweise greift das Befestigungselement 41 in der Arbeitskonfiguration mit seiner nachstehend noch erläuterten Befestigungsanordnung 48, insbesondere mit den Befestigungsvorsprüngen 53, in die Nut des Abstützabschnitts 27 ein. Zweckmäßigerweise ist der Arbeitstisch 40 in der Arbeitskonfiguration werkzeuglos von dem Beförderungsfahrzeug 2 abnehmbar.

Zweckmäßigerweise ist jeweils an der Vorderseite 10, den beiden Längsseiten 9 und/oder der Rückseite 8 des Beförderungsfahrzeugs 2, insbesondere des integrierten Tischs 18, ein entsprechender Abstützabschnitt 27 vorgesehen, an dem der Arbeitstisch 40 abgestützt werden kann. Der Arbeitstisch 40 ist folglich wahlweise an der Vorderseite 10, einer ersten Längsseite 9, einer zweiten Längsseite 9 und/oder der Rückseite 8 anbringbar.

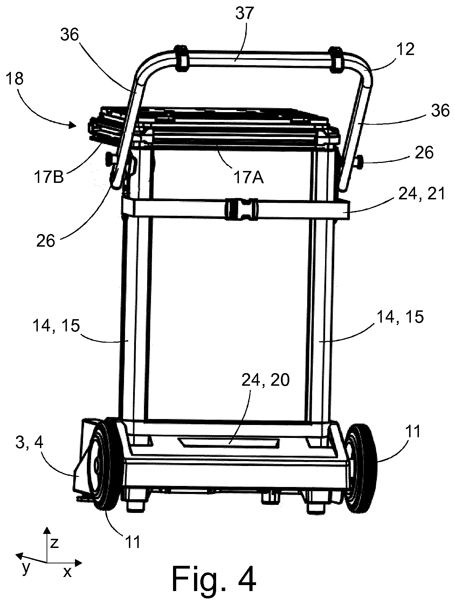

Als nächstes soll auf die Arbeitstisch-Befestigungsschnittstelle 24 näher eingegangen werden, insbesondere unter Bezugnahme auf die Figuren 4 bis 6.

Die Arbeitstisch-Befestigungsschnittstelle 24 dient dazu, den Arbeitstisch 40 an dem Beförderungsfahrzeug 2 zu befestigen, und zwar derart, dass sich der Arbeitstisch 40 stabil von dem Beförderungsfahrzeug 2 transportieren lässt. Vorzugsweise ist die Arbeitstisch-Befestigungsschnittstelle 24 derart ausgebildet, dass der Arbeitstisch 40 in angebrachtem Zustand in sämtliche Raumrichtungen relativ zum Beförderungsfahrzeug 2 fixiert ist.

Die Arbeitstisch-Befestigungsschnittstelle 24 umfasst eine erste Befestigungseinrichtung 20 und eine zweite Befestigungseinrichtung 21. Die beiden Befestigungseinrichtungen 20, 21 sind beispielsweise in der Figur 4 gezeigt

Die erste Befestigungseinrichtung 20 ist derart ausgestaltet, dass der Arbeitstisch 40 mit dem Befestigungselement 41 in einer relativ zum vertikalen Gestellabschnitt 14 gekippten Ausrichtung an die erste Befestigungseinrichtung 20 anbringbar ist und durch Verschwenkung hin zu dem vertikalen Gestellabschnitt 14 eine vertikale Fixierung an der ersten Befestigungseinrichtung 20 erzielt wird. Mit der zweiten Befestigungseinrichtung 21 ist der Arbeitstisch 40 dann horizontal fixierbar, insbesondere an dem vertikalen Gestellabschnitt 14.

Zur Abnahme des Arbeitstischs 40 ist es notwendig, die zweite Befestigungseinrichtung 21 zu lösen und den Arbeitstisch 40 weg von dem Gestellabschnitt 14 zu verschwenken, so dass eine relativ zum vertikalen Gestellabschnitt 14 gekippte Ausrichtung einnimmt. Der Arbeitstisch 40 lässt sich dann durch eine lineare Bewegung in y-z-Richtung von dem Beförderungsfahrzeug 2 abnehmen.

Im Folgenden soll auf eine exemplarische Ausgestaltung der ersten Befestigungseinrichtung 20 und der zweiten Befestigungseinrichtung 21 im Detail eingegangen werden:
Die erste Befestigungseinrichtung 20 ist an dem unteren Abschnitt 3 vorhanden und in rückwärtiger Richtung hinter dem vertikalen Gestellabschnitt 14 angeordnet. Exemplarisch umfasst die erste Befestigungseinrichtung 20 eine Befestigungsstruktur 29, mit der das Befestigungselement 41 in Eingriff gebracht werden kann, um den Arbeitstisch 40 an der Arbeitstisch-Befestigungsschnittstelle 24 zu befestigen.

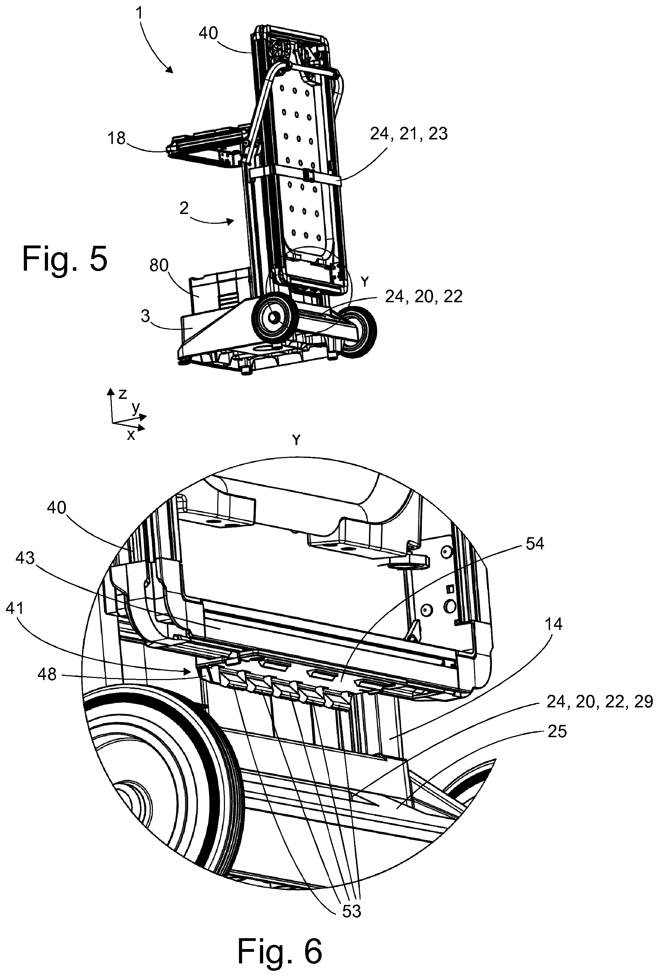

Die Figur 6 zeigt den in der Figur 5 mit "Y" gekennzeichneten Bereich im Detail. Zum Zwecke der besseren Sichtbarkeit ist der Arbeitstisch 40 in den Figuren 5 und 6 in einer Position gezeigt, in der das Befestigungselement 41 nicht in den Schlitz 22 eingeführt ist.

In der Figur 6 ist insbesondere die erste Befestigungseinrichtung 20 zu sehen, die einen sich in x-Richtung erstreckenden Schlitz 22 zur Aufnahme des Befestigungselements 41 umfasst. Zweckmäßigerweise ist der Schlitz 22 in y-Richtung unmittelbar hinter dem vertikalen Gestellabschnitt 14 angeordnet. Der Schlitz 22 befindet sich auf einer angewinkelten Oberseite 25.

In der Figur 6 ist ferner das Befestigungselement 41 zu sehen. Das Befestigungselement 41 ist an einer Stirnseite des Arbeitstischs 40 angeordnet. Exemplarisch ist das Befestigungselement 41 an einem querseitigen Arbeitstisch-Gestellelement 43 angeordnet, das hier exemplarisch als Profilelement ausgebildet ist.

Das Befestigungselement 41 verfügt über eine Befestigungsanordnung 48. In einer y-z-Seitenansicht (in der Transportstellung des Arbeitstischs 40) hat die Befestigungsanordnung 48 eine L-förmige Grundgestalt. Exemplarisch umfasst die Befestigungsanordnung 48 über eine Mehrzahl von in x-Richtung nebeneinander angeordneten L-förmigen Befestigungsvorsprüngen 53, die jeweils über einen vertikal verlaufenden ersten Schenkel und einen sich von dem ersten Schenkel schräg nach unten in eine y-z-Richtung erstreckenden zweiten Schenkel verfügen. Exemplarisch umfasst die Befestigungsanordnung 48 über fünf Befestigungsvorsprünge 53. Zwei benachbarte Befestigungsvorsprünge 53 sind in x-Richtung jeweils voneinander beabstandet. Die Befestigungsanordnung 48 ist in den Schlitz 22 einführbar.

Das Befestigungselement 41 verfügt ferner über einen plattenförmigen Abschnitt 54, mit dem das Befestigungselement 41 an dem Arbeitstisch-Gestellelement 43 angebracht ist. Auf der dem Arbeitstisch-Gestellelement 43 abgewandten Seite des plattenförmigen Abschnitts 54 ist die Befestigungsanordnung 48 angeordnet. Zweckmäßigerweise ist das Befestigungselement 41 ein einstückiges Teil. Die Befestigungsanordnung 48, insbesondere das gesamte Befestigungselement 41, ist zweckmäßigerweise aus Kunststoff gefertigt.

Über den Schlitz 22 ist die Befestigungsstruktur 29 zugänglich. Die Befestigungsanordnung 48 und der Schlitz 22 sind derart ausgestaltet, dass sich die Befestigungsanordnung 48 nur in der vorstehend erwähnten, gekippten Stellung des Arbeitstischs 40 in den Schlitz 22 einführen lässt. Die Befestigungsstruktur 29 umfasst eine (in den Figuren nicht gezeigte) Befestigungsfläche, die mit der in den Schlitz 22 eingeführten Befestigungsanordnung 48 durch Verschwenken des Arbeitstischs 40 in Eingriff gebracht werden kann, so dass die Befestigungsanordnung 48 die Befestigungsfläche hintergreift.

Die Arbeitstisch-Befestigungsschnittstelle 24 verfügt über eine zweite Befestigungseinrichtung 21, die am vertikalen Gestellabschnitt 14 angeordnet ist. Die zweite Befestigungseinrichtung 21 ist insbesondere in den Figuren 4 und 5 gezeigt. Die zweite Befestigungseinrichtung 21 ist exemplarisch im oberen Bereich des vertikalen Gestellabschnitts 14 angeordnet. Die zweite Befestigungseinrichtung 21 umfasst einen Gurt 23, mit dem der Arbeitstisch in der Transportstellung an dem vertikalen Gestellabschnitt 14 in horizontaler Richtung fixierbar ist. Der Gurt 23 ist exemplarisch an zwei Verankerungspunkten befestigt. Die beiden Verankerungspunkte liegen exemplarisch auf gleicher Höhe. Exemplarisch ist der Gurt 23 in der Transportstellung quer um den Arbeitstisch 40 gelegt. Der Gurt 23 hat in diesem Zustand in einer x-y-Ansicht einen U-förmigen Verlauf. Der Gurt 23 verfügt über ein Verschlusselement 28, mit dem er sich zur Freigabe oder Aufnahme des Arbeitstischs 40 öffnen und zur Fixierung des Arbeitstischs 40 schließen lässt. Exemplarisch ist das Verschlusselement 28 in x-Richtung in der Mitte des Gurts 23 angeordnet.

Im Folgenden soll der Griff 12 näher erläutert werden, insbesondere unter Bezugnahme auf die Figur 4:
Der Griff 12 ist zweckmäßigerweise bügelförmig, insbesondere U-förmig ausgebildet. Der Griff 12 verfügt über zwei äußere Abschnitte 36, mit denen der Griff an dem vertikalen Gestellabschnitt 14 verschwenkbar angebracht ist. Die beiden äußeren Abschnitte 36 sind über einen mittleren, in x-Richtung verlaufenden Abschnitt 37 verbunden.

Das Beförderungsfahrzeug 2 verfügt über einen Positioniermechanismus 26, mit dem der Griff 12 in wenigstens zwei verschiedene Schwenkstellungen positioniert und fixiert werden kann. Exemplarisch ist der Griff 12 durch den Positioniermechanismus in drei verschiedenen Schwenkstellungen fixierbar.

Im Folgenden soll näher auf den Arbeitstisch 40 eingegangen werden, insbesondere unter Bezugnahme auf die Figuren 7 und 8.

Der Arbeitstisch 40 hat eine längliche, insbesondere rechteckige Grundgestalt. Zweckmäßigerweise ist der Arbeitstisch 40 wenigstens 1,5 mal, insbesondere doppelt so lang wie breit. Der Arbeitstisch 40 verfügt über ein rahmenförmiges Arbeitstisch-Gestell, das längsseitige Arbeitstisch-Gestellelemente 42 und querseitige Arbeitstisch-Gestellelemente 43 umfasst. Die längsseiteigen Arbeitstisch-Gestellelemente 42 und die querseitigen Arbeitstisch-Gestellelemente 43 sind zweckmäßigerweise stangenförmig und insbesondere als Profile, vorzugsweise als Metallprofile, ausgebildet. Auf das rahmenförmige Arbeitstisch-Gestell ist eine Tischplatte 44 aufgesetzt.

Der Arbeitstisch 40 verfügt über die ausklappbare Tischbeinanordnung 46, die exemplarisch U-förmig ist. Die (im ausgeklappten Zustand) vertikalen Abschnitte der Tischbeinanordnung 46 sollen auch als Tischbeine bezeichnet werden. Die Tischbeinanordnung 46 ist zweckmäßigerweise an der Unterseite des Arbeitstischs 40 angeordnet, vorzugsweise im Bereich einer Stirnseite des Arbeitstischs 40. Die Tischbeinanordnung 46 ist insbesondere an dem Arbeitstisch-Gestell verschwenkbar gelagert. Die Schwenkachse der Tischbeinanordnung 46 ist zweckmäßigerweise parallel zu den querseitigen Arbeitstisch-Gestellelementen 43 ausgerichtet. Das Arbeitstisch-Gestell und die Unterseite der Tischplatte 44 definieren ein Aufnahmevolumen, das die Tischbeinanordnung 46 im eingeklappten Zustand aufnimmt, insbesondere vollständig. Der eingeklappte Zustand der Tischbeinanordnung 46 kann auch als Transportstellung und der ausgeklappte Zustand als Arbeitsstellung bezeichnet werden.

Der Arbeitstisch 40 verfügt über Fixierelemente 45, mit denen die Tischbeinanordnung 46 in der Arbeitsstellung fixiert werden kann. Exemplarisch handelt es sich bei den Fixierelementen 45 um plattenförmige Elemente, die jeweils am oberen Ende an einem Tischbein vorgesehen sind und um das jeweilige Tischbein drehbar gelagert sind.

Der Arbeitstisch 40 ist in Entsprechung zu dem integrierten Tisch 18 ausgebildet. Insbesondere umfassen die Arbeitstisch-Gestellelemente 42, 43 und die horizontalen Gestellelemente 17A, 17B des integrierten Tischs 18 die gleichen Profile bzw. Profile gleicher Art, vorzugsweise gleichen Querschnitts, (aber zweckmäßigerweise unterschiedlicher Länge).

Vorzugsweise umfassen die Arbeitstisch-Gestellelemente 42, 43 ebenfalls einen oder mehrere Abstützabschnitte 27, beispielsweise eine Nut, insbesondere eine V-Nut, an denen ein oder mehrere weitere Arbeitstische 40 mit ihrem Befestigungselement 41 abgestützt werden können.

Die Tischplatte 44 verfügt zweckmäßigerweise über ein Lochraster. Zweckmäßigerweise haben die Lochraster der beiden Tischplatten 44, 19 die gleiche Lochbeabstandung.

Im Folgenden soll ein Verfahren beschrieben werden, wie die Beförderungsvorrichtung 1 von der Transportkonfiguration (vgl. Fig. 3) in die Arbeitskonfiguration (vgl. Fig. 7) versetzt werden kann.

Zunächst wird die Befestigung des Arbeitstischs 40 an der Arbeitstisch-Befestigungsschnittstelle 24 gelöst. Zu diesem Zweck wird die zweite Befestigungseinrichtung 21 - hier der Gurt 23 - gelöst. Ferner wird die erste Befestigungseinrichtung 20 gelöst, und zwar indem der Arbeitstisch 40 in Richtung weg von dem vertikalen Gestellabschnitt 14 in eine vorbestimmte Kippstellung versetzt wird. Um diese Kippstellung zu ermöglichen, wird zweckmäßigerweise der Griff 12 in eine entsprechende Schwenkstellung versetzt.

Der Arbeitstisch 40 kann dann vollständig von dem Beförderungsfahrzeug 2 abgenommen werden. Als nächstes wird die Tischbeinanordnung 46 ausgeklappt und durch Verschwenken der Fixierelemente 45 in dem ausgeklappten Zustand verriegelt.

Der Arbeitstisch 40 wird dann in eine horizontale Ausrichtung gebracht und mit seinem Befestigungselement 41 an einem Abstützabschnitt 27 des Beförderungsfahrzeugs 2 angebracht. Die Beförderungsvorrichtung 1 befindet sich dann in der Arbeitskonfiguration.

## Patentansprüche

1. Beförderungsvorrichtung (1), umfassend ein Beförderungsfahrzeug (2), das umfasst:
- einen Fahrzeugkörper mit einem unteren Abschnitt (3) und einem sich von dem unteren Abschnitt (3) nach oben erstreckenden vertikalen Gestellabschnitt (14), wobei der untere Abschnitt (3) über eine Stellfläche (5) und eine Behälter-Befestigungsschnittstelle (6) verfügt, mit der ein auf der Stellfläche (5) abgestellter kastenförmige Behälter (80) an dem unteren Abschnitt (3) befestigbar ist, ohne den vertikalen Gestellabschnitt (14) zu verändern,
- einen am Fahrzeugkörper angeordneten Griff (12), mit dem das Beförderungsfahrzeug (2) in eine Kippstellung versetzbar ist,
- zwei am unteren Abschnitt (3) angeordnete Räder (11), mit denen das Beförderungsfahrzeug (2) in der Kippstellung gegenüber einem Boden abgestützt und relativ zum Boden bewegt werden kann, und
- einen horizontal ausgerichteten, integrierten Tisch (18), der am oberen Ende des vertikalen Gestellabschnitts (14) angeordnet ist und den oberen Abschluss des Fahrzeugkörpers bildet,
**dadurch gekennzeichnet, dass**
die Beförderungsvorrichtung (1) ferner einen länglichen Arbeitstisch (40) sowie eine am Beförderungsfahrzeug (2) vorhandene Arbeitstisch-Befestigungsschnittstelle (24) umfasst, mit der der längliche Arbeitstisch (40) in einer vertikalen Ausrichtung in einem rückwärtigen Bereich (7) an dem Beförderungsfahrzeug (2) werkzeuglos befestigbar ist, um eine Transportstellung einzunehmen, in der der längliche Arbeitstisch (40) durch das Beförderungsfahrzeug (2) beförderbar ist, wobei der integrierte Tisch (18) über einen Abstützabschnitt (27) verfügt, an dem der Arbeitstisch (40) in einer horizontalen Ausrichtung mit einem am Arbeitstisch (40) stirnseitig angebrachten Befestigungselement (41) abgestützt werden kann, um eine stabile Arbeitsstellung einzunehmen.

2. Beförderungsvorrichtung (1) nach Anspruch 1, **dadurch gekennzeichnet, dass** der integrierte Tisch (18) ein am oberen Ende des vertikalen Gestellabschnitts (14) angeordnetes horizontales Gestellelement (17A) und eine auf dem horizontalen Gestellelement (17A) angeordnete Tischplatte (19) umfasst.

3. Beförderungsvorrichtung (1) nach Anspruch 2, **dadurch gekennzeichnet, dass** das horizontale Gestellelement (17A) als Versteifungselement für den vertikalen Gestellabschnitt (14) dient.

4. Beförderungsvorrichtung (1) nach Anspruch 2 oder 3, **dadurch gekennzeichnet, dass** der vertikale Gestellabschnitt (14) zwei längliche, sich von dem unteren Abschnitt (3) vertikal nach oben erstreckende, parallel zueinander verlaufende vertikale Gestellelemente (15) umfasst und sich das horizontale Gestellelement (17A) vom oberen Ende des einen vertikalen Gestellelements (15) zum oberen Ende des anderen vertikalen Gestellelements (15) erstreckt.

5. Beförderungsvorrichtung (1) nach Anspruch 4, **dadurch gekennzeichnet, dass** die vertikalen Gestellelemente (15) als Profile ausgebildet sind.

6. Beförderungsvorrichtung (1) nach einem der Ansprüche 2 bis 5, **dadurch gekennzeichnet, dass** das horizontale Gestellelement (17A) Teil eines rahmenförmigen horizontalen Gestellabschnitts ist, der am oberen Ende des vertikalen Gestellabschnitts (14) angeordnet ist.

7. Beförderungsvorrichtung (1) nach Anspruch 6, **dadurch gekennzeichnet, dass** der horizontale Gestellabschnitt vier als Profile ausgebildete längliche horizontale Gestellelemente (17A, 17B) umfasst.

8. Beförderungsvorrichtung (1) nach einem der voranstehenden Ansprüche, **dadurch gekennzeichnet, dass** der den unteren Abschnitt (3), den vertikalen Gestellabschnitt (14) und den integrierten Tisch (18) umfassende Fahrzeugkörper eine dauerhaft integre Struktur darstellt, die bei der Abnahme und/oder Anbringung eines kastenförmigen Behälters (80) an der Behälter-Befestigungsschnittstelle (6) unverändert bleibt.

9. Beförderungsvorrichtung (1) nach einem der voranstehenden Ansprüche, **dadurch gekennzeichnet, dass** der vertikale Gestellabschnitt (14) in einem rückwärtigen Bereich (7) des Beförderungsfahrzeugs (2) angeordnet ist.

10. Beförderungsvorrichtung (1) nach Anspruch 7, **dadurch gekennzeichnet, dass** der integrierte Tisch (18) gegenüber dem unteren Abschnitt (3) nur durch den im rückwärtigen Bereich (7) angeordneten vertikalen Gestellabschnitt (14) abgestützt wird, so dass vor dem vertikalen Gestellabschnitt (14) und zwischen dem integrierten Tisch (18) und dem unteren Abschnitt (3) ein vollständig freies Volumen zur Aufnahme eines oder mehrerer kastenförmiger Behälter (80) vorhanden ist.

11. Beförderungsvorrichtung (1) nach einem der Ansprüche 2 bis 7, **dadurch gekennzeichnet, dass** die Tischplatte (19) ein Lochraster (120) und/oder Vertiefungen (121) zur Aufnahme von Standfüssen eines Behälters und/oder eine über die Oberseite der Tischplatte verlaufende Nut (122) aufweist.

12. Beförderungsvorrichtung (1) nach einem der voranstehenden Ansprüche, ferner umfassend den kastenförmigen Behälter (80), der auf der Stellfläche (5) angeordnet ist und mit der Behälter-Befestigungsschnittstelle (6) an dem unteren Abschnitt (3) befestigt ist.

13. Beförderungsvorrichtung (1) nach einem der voranstehenden Ansprüche, wobei in der Arbeitsstellung die Höhe des Arbeitstischs (40) gleich der Höhe des integrierten Tischs (18) ist.

14. Beförderungsvorrichtung (1) nach einem der voranstehenden Ansprüche, wobei der Abstützabschnitt (27) eine Nut aufweist, in die das Befestigungselement (41) eingreifen kann.

15. Beförderungsvorrichtung (1) nach einem der voranstehenden Ansprüche, wobei jeweils an einer Vorderseite, an beiden Längsseiten und/oder einer Rückseite des integrierten Tischs (18) ein entsprechender Abstützabschnitt (27) vorgesehen ist, an dem der Arbeitstisch (40) abgestützt werden kann.

## Claims

1. Transport device (1) comprising a transport vehicle (2), which comprises:
- a vehicle body having a lower section (3) and a vertical frame section (14) extending upwardly from the lower section (3), the lower section (3) having a support surface (5) and a container attachment interface (6) by which a box-shaped container (80) placed on the support surface (5) can be attached to the lower section (3) without altering the vertical frame section (14),
- a handle (12) arranged on the vehicle body, with which the transport vehicle (2) can be moved into a tilted position,
- two wheels (11) arranged on the lower section (3), with which the transport vehicle (2) can be supported in the tilted position relative to a floor and moved relative to the floor, and
- a horizontally oriented integrated table (18) located at the upper end of the vertical frame section (14) and forming the upper end of the vehicle body, **characterized in that**
the transport device (1) further comprises an elongate worktable (40) and a worktable attachment interface (24) provided on the transport vehicle (2), with which the elongate worktable (40) can be attached in a vertical orientation in a rearward area (7) on the transport vehicle (2) without the use of tools, in order to assume a transport position in which the elongate worktable (40) can be transported by the transport vehicle (2), wherein the integrated table (18) has a support section (27) on which the worktable (40) can be supported in a horizontal orientation with an attachment element (41) arranged at a front side of the worktable (40), to assume a stable working position.

2. Transport device (1) according to claim 1, **characterized in that** the integrated table (18) comprises a horizontal frame element (17A) disposed at the upper end of the vertical frame section (14) and a table top (19) disposed on the horizontal frame element (17A).

3. Transport device (1) according to claim 2, **characterized in that** the horizontal frame element (17A) serves as a stiffening element for the vertical frame section (14).

4. Transport device (1) according to claim 2 or 3, **characterized in that** the vertical frame section (14) comprises two elongated vertical frame elements (15) extending vertically upward from the lower section (3) in parallel with each other, and the horizontal frame element (17A) extends from the upper end of one vertical frame element (15) to the upper end of the other vertical frame element (15).

5. Transport device (1) according to claim 4, **characterized in that** the vertical frame elements (15) are formed as profiles.

6. Transport device (1) according to any one of claims 2 to 5, **characterized in that** the horizontal frame element (17A) is part of a frame-shaped horizontal frame section arranged at the upper end of the vertical frame section (14).

7. Transport device (1) according to claim 6, **characterized in that** the horizontal frame section comprises four elongated horizontal frame elements (17A, 17B) formed as profiles.

8. Transport device (1) according to one of the above claims, **characterized in that** the vehicle body comprising the lower section (3), the vertical frame section (14) and the integrated table (18) constitutes a permanently integral structure which remains unchanged during the removal and/or attachment of a box-shaped container (80) at the container attachment interface (6).

9. Transport device (1) according to one of the preceding claims, **characterized in that** the vertical frame section (14) is arranged in a rearward area (7) of the transport vehicle (2).

10. Transport device (1) according to claim 7, **characterized in that** the integrated table (18) is supported relative to the lower section (3) only by the vertical frame section (14) located in the rearward area (7), so that in front of the vertical frame section (14) and between the integrated table (18) and the lower section (3) there is a completely free volume for receiving one or more box-shaped containers (80).

11. Transport device (1) in accordance with one of claims 2 to 7, **characterized in that** the table top (19) has a hole grid (120) and/or recesses (121) for receiving the feet of a container and/or a groove (122) extending over the upper side of the table top.

12. Transport device (1) according to one of the preceding claims, further comprising the box-shaped container (80) arranged on the support surface (5) and attached to the lower section (3) by means of the container attachment interface (6) .

13. Transport device (1) according to one of the preceding claims, wherein in the working position the height of the worktable (40) is equal to the height of the integrated table (18).

14. Transport device (1) according to one of the preceding claims, wherein the support section (27) has a groove, in which the attachment element (41) can engage.

15. Transport device (1) according to one of the preceding claims, wherein at each of a front side, both longitudinal sides and/or a rear side of the integrated table (18), a corresponding support section (27) is provided, on which the worktable (40) can be supported.

## Revendications

1. Dispositif de transport (1) comprenant un véhicule de transport (2) qui comprend :
- un corps de véhicule avec une section inférieure (3) et une section de bâti verticale (14) s'étendant vers le haut depuis la section inférieure (3), dans lequel la section inférieure (3) dispose d'une surface de pose (5) et d'une interface de fixation de contenant (6), avec laquelle un contenant (80) en forme de caisson déposé sur la surface de pose (5) peut être fixé sur la section inférieure (3) sans modifier la section de bâti verticale (14),
- une poignée (12) disposée sur le corps du véhicule, avec laquelle le véhicule de transport (2) peut être amené dans une position de basculement,
- deux roues (11) disposées sur la section inférieure (3), avec lesquelles le véhicule de transport (2) peut être soutenu dans la position de basculement par rapport à un sol et peut être déplacé par rapport au sol, et
- une table intégrée (18) orientée horizontalement, qui est disposée sur l'extrémité supérieure de la section de bâti verticale (14) et forme la bordure supérieure du corps du véhicule, **caractérisé en ce que** le dispositif de transport (1) comprend en outre une table de travail allongée (40) ainsi qu'une interface de fixation de table de travail (24) présente sur le véhicule de transport (2), avec laquelle la table de travail allongée (40) peut être fixée sans outil sur le véhicule de transport (2) dans une zone arrière (7) peut être fixée dans une orientation verticale pour adopter une position de transport, dans laquelle la table de travail allongée (40) peut être transportée par le véhicule de transport (2), dans lequel la table intégrée (18) dispose d'une section d'appui (27), sur laquelle la table de travail (40) peut être soutenue dans une orientation horizontale par un élément de fixation (41) installé côté frontal sur la table de travail (40) pour adopter une position de travail stable.

2. Dispositif de transport (1) selon la revendication 1, **caractérisé en ce que** la table intégrée (18) comprend un élément de bâti horizontal (17A) disposé sur l'extrémité supérieure de la section de bâti verticale (14) et un plateau de table (19) disposé sur l'élément de bâti horizontal (17A).

3. Dispositif de transport (1) selon la revendication 2, **caractérisé en ce que** l'élément de bâti horizontal (17A) sert d'élément de raidissement pour la section de bâti verticale (14).

4. Dispositif de transport (1) selon la revendication 2 ou 3, **caractérisé en ce que** la section de bâti verticale (14) comprend deux éléments de bâti verticaux (15) allongés s'étendant depuis la section inférieure (3) verticalement vers le haut, s'étendant de manière parallèle l'un par rapport à l'autre et l'élément de bâti horizontal (17A) s'étend depuis l'extrémité supérieure d'un élément de bâti vertical (15) à l'extrémité supérieure de l'autre élément de bâti vertical (15).

5. Dispositif de transport (1) selon la revendication 4, **caractérisé en ce que** les éléments de bâti verticaux (15) sont réalisés en tant que profilés.

6. Dispositif de transport (1) selon l'une quelconque des revendications 2 à 5, **caractérisé en ce que** l'élément de bâti horizontal (17A) fait partie d'une section de bâti horizontale en forme de cadre qui est disposée sur l'extrémité supérieure de la section de bâti verticale (14).

7. Dispositif de transport (1) selon la revendication 6, **caractérisé en ce que** la section de bâti horizontale comprend quatre éléments de bâti horizontaux allongés (17A, 17B) réalisés en tant que profilés.

8. Dispositif de transport (1) selon l'une quelconque des revendications précédentes, **caractérisé en ce que** le corps de véhicule comprenant la section inférieure (3), la section de bâti verticale (14) et la table intégrée (18) représente une structure durablement intègre, qui reste inchangée lors du retrait et/ou de la mise en place d'un contenant (80) en forme de caisson sur l'interface de fixation de contenant(6).

9. Dispositif de transport (1) selon l'une quelconque des revendications précédentes, **caractérisé en ce que** la section de bâti verticale (14) est disposée dans une zone arrière (7) du véhicule de transport (2).

10. Dispositif de transport (1) selon la revendication 7, **caractérisé en ce que** la table intégrée (18) est soutenue par rapport à la section inférieure (3) seulement par la section de bâti verticale (14) disposée dans la zone arrière (7), de telle sorte qu'il existe avant la section de bâti verticale (14) et entre la table intégrée (18) et la section inférieure (3) un volume entièrement libre pour recevoir un ou plusieurs contenants (80) en forme de caisson.

11. Dispositif de transport (1) selon l'une quelconque des revendications 2 à 7, **caractérisé en ce que** le plateau de table (19) présente une grille de trous (120) et/ou des renfoncements (121) pour recevoir des pieds d'un contenant et/ou une rainure (122) s'étendant au-dessus du côté supérieur du plateau de table.

12. Dispositif de transport (1) selon l'une quelconque des revendications précédentes, comprenant en outre le contenant (80) en forme de caisson, qui est disposé sur la surface de pose (5) et est fixé sur la section inférieure (3) avec l'interface de fixation de contenant (6).

13. Dispositif de transport (1) selon l'une quelconque des revendications précédentes, dans lequel, dans la position de travail, la hauteur de la table de travail (40) est égale à la hauteur de la table intégrée (18).

14. Dispositif de transport (1) selon l'une quelconque des revendications précédentes, dans lequel la section d'appui (27) présente une rainure avec laquelle l'élément de fixation (41) peut venir en prise.

15. Dispositif de transport (1) selon l'une quelconque des revendications précédentes, dans lequel une section d'appui (27) correspondante est prévue respectivement sur un côté avant, sur les deux côtés longitudinaux et/ou sur un côté arrière de la table intégrée (18), sur laquelle la table de travail (40) peut être soutenue.
